# EUROPEAN PATENT APPLICATION

(11) **EP 4 209 633 A1**
(43) Date of publication of application: **12.07.2023**
(21) Application number: 21900468.6
(22) Date of filing: 24.11.2021
(51) Int. Cl.: D21H 17/67, D21H 21/10

(54) **PRODUCTION METHOD FOR HIGH LOADING MATERIAL-CONTAINING PAPER**

(30) Priority: 04.12.2020 JP 2020202127
(71) Applicant: Kurita Water Industries Ltd., Tokyo 164-0001 (JP)
(72) Inventor: CHEN, Jiayi, Tokyo 164-0001 (JP); FUKUDA, Chise, Tokyo 164-0001 (JP)
(74) Representative: TBK
(86) International application number: PCT/JP2021/043010
(87) International publication number: WO 2022/118713

(57) **Abstract**

A method for producing a paper with high filler content, which can provide a paper having high ash content and high opacity with small ratio of filler flowing into the white water. The method for producing a paper with high filler content includes: a paper stock preparation step S1 of adding a filler including titanium dioxide to a pulp slurry to give a paper stock; an amphoteric polyacrylamide addition step S2 of adding amphoteric polyacrylamide to the paper stock in an amount of 0.005% by mass or more and 3% by mass or less based on the total mass of the solid content in pulp fiber and the filler; and a papermaking step S3 of making paper S3 from the paper stock to which the amphoteric polyacrylamide is added, wherein in the paper stock obtained in the paper stock preparation step, a content rate of titanium dioxide is 1% by mass or more and a content rate of the filler including titanium dioxide is 8.5% by mass or more and 50% by mass or less based on the total mass of the solid content in pulp fiber and the filler.

## Description

### TECHNICAL FIELD

The present invention relates to a method for producing paper with high filler content, and in particular to a method for producing a paper with high filler content for which high opacity is required.

### BACKGROUND ART

In recent years, lightweight and low basis weight of paper has been desired from the point of view of resource saving and reduction of waste, and a known example of such paper is filler-containing paper in which a filler is included.

For filler-containing paper, improvement of optical properties such as opacity and whiteness in addition to lightweight and low basis weight is particularly strongly demanded. For example, high opacity is required for construction paper such as veneer paper to avoid the base material to be seen through when such paper is laminated with the base material. High opacity is also required for india paper which is used for dictionaries and the like, and it is important that letters and figures are not seen through the back.

In this regard, a method in which a filler for papermaking such as titanium dioxide and calcium carbonate is added to pulp is used as a method for improving optical properties opacity and whiteness. In particular, having high light scattering ability, titanium dioxide can provide paper with high opacity. However, titanium dioxide has smaller particle size than other papermaking fillers and thus yield in papermaking by a paper machine is very low, and then titanium dioxide is easily accumulated on or contaminates the papermaking machine and related apparatus. Thus, the method of adding titanium dioxide to pulp has the problem of reduction in production efficiency due to an increase in frequency of washing paper machines. This method also has the disadvantage of reduction of quality of paper, because paper includes titanium dioxide accumulation and contamination.

Furthermore, even when a filler other than titanium dioxide, for example, light calcium carbonate is used and the ratio of the filler in paper is increased in order to improve opacity, the amount of filler flowing into the white water system without being fixed on paper is increased. Therefore, this also has the problem of reduced production efficiency and reduction of quality of paper.

In such circumstance, to improve the yield of the filler, a method in which an retention aid is added to pulp together with a filler has been used. Examples of methods of adding an retention aid to pulp includes a method in which cationic or anionic polyacrylamide alone is added to pulp, a method in which cationic polyacrylamide is added and then anionic polyacrylamide is added thereto, a method using two agents in which after adding cationic polymer, an anionic chemical agent such as colloidal silica and bentonite is added, a method using three agents in which a cationic coagulant is added before the above method using the two agents, and a method using three agents in which after adding a cationic polymer, an anionic polymer and an anionic chemical agent are added.

For example, Patent Document 1 discloses a method for papermaking in which carboxymethylcellulose whose degree of substitution is 0.3 to 0.6 is added to cellulose fiber slurry (pulp slurry) and then aluminum sulfate and titanium dioxide are added thereto.

Furthermore, Patent Document 2 discloses a method in which an amphoteric water-soluble polymer which contains acrylamide as a monomer and which is prepared by dispersion polymerization in an aqueous salt solution is added to a paper stock (pulp slurry), and then anionic colloidal silica or bentonite is added thereto.

Patent Document 3 also discloses a method in which a polymer which includes at least N-vinyl formamide as a polymerization component and in which 20 to 100% of the total formyl groups is hydrolyzed, and titanium dioxide or calcium carbonate are added to pulp slurry.

### Citation List

### Patent Document

Patent Document 1: Japanese Unexamined Patent Application, Publication No. 2003-89994
Patent Document 2: Japanese Unexamined Patent Application, Publication No. 9-195197
Patent Document 3: Japanese Unexamined Patent Application, Publication No. 2005-171411

### DISCLOSURE OF THE INVENTION

### Problems to be Solved by the Invention

However, the problem with these methods is that although the yield of filler can be improved, the filler is coagulated and even when the amount of the filler is increased, the resulting paper has low opacity. Furthermore, since titanium dioxide added as a filler is very expensive, titanium dioxide accounts for a large proportion of the cost of raw materials for producing paper. In particular, in a conventional method of adding retention aid, opacity of paper is not increased even if the amount of titanium dioxide added is increased, and thus addition of a large amount of titanium dioxide is not preferred.

In this regard, in the method disclosed in Patent Document 1, carboxymethylcellulose is suspended in pulp slurry, and thus many lumps, which are a coagulate of hydrated powder particles mutually bonded, are likely to be formed in large quantities in pulp slurry. Furthermore, it is difficult to fix filler on pulp fiber efficiently in the method of Patent Document 1 and since thick paper is prepared, there is still room for improvement for increasing ash content and opacity even when the resulting paper is thin.

In the method disclosed in Patent Document 2, yield of filler is improved by adding anionic colloidal silica or bentonite to pulp slurry as a retention aid, but since the amount of the filler added is small, the resulting paper has low ash content and low opacity.

Furthermore, in the method disclosed in Patent Document 3, the relative amount of titanium dioxide, which is a filler, is increased based on pulp fiber to give paper with high ash content and opacity, and thus raw material cost is increased. Furthermore, Patent Document 3 does not focus on the ratio (amount) of filler which is not fixed on paper and flows into the white water system when the amount used of filler such as titanium dioxide is increased, and does not disclose prevention of accumulation of titanium dioxide and contamination in the papermaking machine and related apparatus by reducing the amount of filler flowing into the white water system as much as possible.

The present invention has been made in view of the above actual situation, and an object of the present invention is to provide a method for producing a paper with high filler content, which can provide a paper having high ash content and high opacity with small ratio of filler flowing into the white water system, by fixing filler on pulp fiber in the form of the most homogeneous dispersion possible without coagulation of filler and reducing the ratio (amount) of filler flowing into the white water.

### Means for Solving the Problems

The present inventors have conducted intensive studies to solve the above problem. As a result, the present inventors have found that a method for producing a paper with high filler content, which comprises: a paper stock preparation step of adding a filler comprising a predetermined amount of titanium dioxide to pulp slurry to give a paper stock; and an amphoteric polyacrylamide addition step of adding a predetermined amount of amphoteric polyacrylamide to the paper stock allows a filler to be fixed on pulp fiber in the form of a homogeneous dispersion and reduces the ratio (amount) of filler flowing into the white water system, and thus a paper having high ash content and high opacity can be obtained, and the ratio of filler flowing into the white water can be reduced, and have completed the present invention. More specifically, the present invention provides the following.
(1) A method for producing a paper with high filler content, comprising: a paper stock preparation step of adding a filler comprising titanium dioxide to a pulp slurry to give a paper stock; an amphoteric polyacrylamide addition step of adding amphoteric polyacrylamide to the paper stock in an amount of 0.005% by mass or more and 3% by mass or less based on the total mass of the solid content in pulp fiber and the filler; and a papermaking step of making paper from the paper stock to which the amphoteric polyacrylamide is added, wherein in the paper stock obtained in the paper stock preparation step, a content rate of the titanium dioxide is 1% by mass or more and a content rate of the filler comprising titanium dioxide is 8.5% by mass or more and 50% by mass or less based on the total mass of the solid content in pulp fiber and the filler.
(2) The method for producing a paper with high filler content according to (1) above, wherein in the paper stock preparation step, aluminum sulfate is further added in an amount of 0.5% by mass or more and 10% by mass or less based on the total mass of the solid content in pulp fiber and the filler.
(3) The method for producing a paper with high filler content according to (1) or (2) above, further comprising, before the amphoteric polyacrylamide addition step, an amphoteric polyacrylamide preparation step of polymerizing a monomer in an aqueous medium to prepare the amphoteric polyacrylamide, wherein the monomer comprises 60% by mole or more and 98% by mole or less of (meth)acrylamide, 1% by mole or more and 39% by mole or less of an anionic vinyl monomer and 1% by mole or more and 39% by mole or less of a cationic vinyl monomer, based on the total number of moles.
(4) The method for producing a paper with high filler content according to any one of (1) to (3) above, wherein the amphoteric polyacrylamide prepared in the amphoteric polyacrylamide preparation step has a Brookfield viscosity of 1,000 cps or more and 20,000 cps or less at a solid concentration of 10% by mass.
(5) The method for producing a paper with high filler content according to any one of (1) to (4) above, wherein the paper with high filler content has an ash content of 8.5% by mass or more and 50% by mass or less.

### Effects of the Invention

The present invention is capable of fixing filler which has been added to pulp slurry on pulp fiber in the form of a relatively homogeneous dispersion, and thus can provide a method for producing a paper with high filler content having high ash content and high opacity even when the amount of the filler added is reduced and in which the ratio of filler flowing into the white water is small.

In particular, since filler can be efficiently fixed on pulp fiber in the present invention, the amount of filler used for preparing a paper with high filler content can be reduced. At the same time a reduced ratio of outflow of filler into white water suppresses contamination of papermaking machines and related apparatus due to filler not fixed on pulp fiber. Thus the present invention can provide a method for producing a paper with high filler content which can reduce environmental load and economic load.

Furthermore, in the method of the present invention, filler such as titanium dioxide and calcium carbonate in the paper stock in papermaking is fixed on pulp fiber relatively homogeneously without being excessively coagulated. Thus, a paper with high filler content which has good physical properties such as high opacity and whiteness and which can be suitably used as construction paper, india paper and the like can be obtained.

### BRIEF DESCRIPTION OF THE DRAWINGS

Figure 1 is a flow diagram illustrating an example of the method for producing a paper with high filler content of the present invention.
Figure 2(a) is a schematic view illustrating the state of dispersion of filler in a paper stock in the method for producing a paper with high filler content of the present invention; and Figure 2(b) is a schematic view illustrating the state of dispersion of filler in a paper stock in a conventional method.

### PREFERRED MODE FOR CARRYING OUT THE INVENTION

In the following, specific embodiments of the present invention will be described in detail, but the present invention is not limited to the following embodiments. The present invention may be appropriately modified and practiced within the scope of the object of the present invention.

### <Method for producing paper with high filler content>

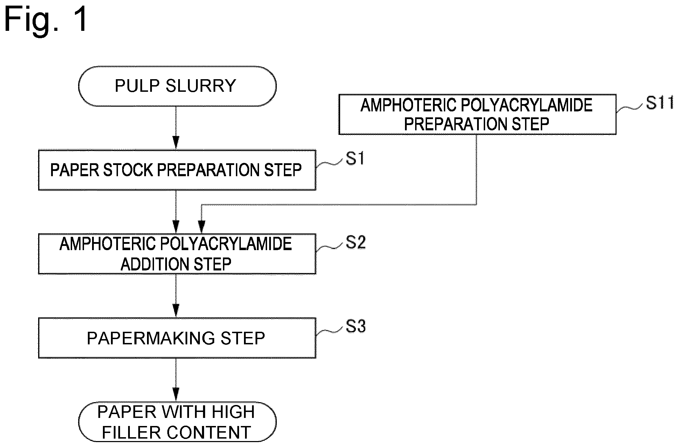

As shown in the flow diagram of Figure 1, the method for producing a paper with high filler content of the present invention comprises: a paper stock preparation step S 1 of adding a filler comprising titanium dioxide to a pulp slurry to give a paper stock; an amphoteric polyacrylamide addition step S2 of adding amphoteric polyacrylamide to the paper stock; and a papermaking step S3 of making paper from the paper stock to which the amphoteric polyacrylamide is added. In the paper stock obtained in the paper stock preparation step S 1, the content rate of the titanium dioxide is 1% by mass or more and the content rate of the filler comprising titanium dioxide is 8.5% by mass or more and 50% by mass or less, based on the total mass of the solid content in the pulp fiber and the filler. Furthermore, the amount of amphoteric polyacrylamide added in the amphoteric polyacrylamide addition step S2 is 0.005% by mass or more and 3% by mass or less based on the total mass of the solid content in pulp fiber and the filler. The amount of amphoteric polyacrylamide added is preferably 0.01% by mass or more and 1% by mass or less, and more preferably 0.015% by mass or more and 0.5% by mass or less based on the total mass of the solid content in pulp fiber and the filler.

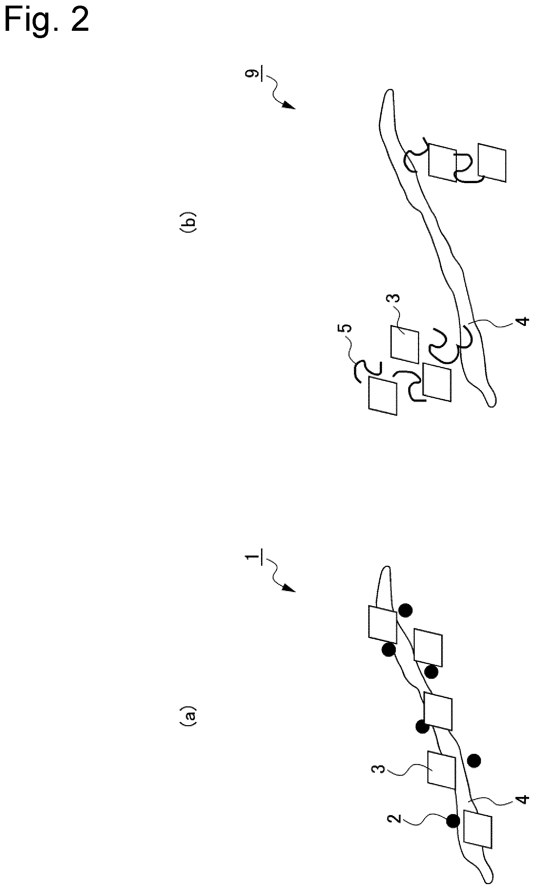

In the producing method of the present invention, a filler 3 such as titanium dioxide and calcium carbonate in a paper stock 1 after addition of an amphoteric polyacrylamide 2 is fixed on a pulp fiber 4 homogeneously without being excessively coagulated as shown in Figure 2(a), and outflow of the filler 3 into the white water system is small. By contrast, in a paper stock 9 in a conventional method, the filler 3 is coagulated due to a retention aid 5 and the coagulant is attached to pulp fiber 4 as shown in Figure 2(b). As described above, the filler 3 is less likely to be coagulated on part of the surface of the pulp fiber 4 and outflow of the filler 3 into the white water system is small in the method of the present invention, and thus the resulting paper with high filler content has improved ash content and opacity.

### (Pulp fiber)

The pulp fiber 4 used in the producing method of the present invention is not particularly limited, and may be what is called virgin pulp such as chemical pulp (also referred to as "kraft pulp") and mechanical pulp, paper residue (waste paper) from steps for producing paper and waste paper such as waste paper for recycling. The pulp fiber 4 is suspended in water to form pulp slurry.

### (Paper stock preparation step S1)

In the paper stock preparation step S1, the filler 3 including titanium dioxide is added to pulp slurry to give a paper stock. This allows formation of a paper stock including the pulp fiber 4 and the filler 3.

The filler 3 is an additive that forms ash in the resulting paper with high filler content. The filler 3 includes at least titanium dioxide so as to provide high opacity. The filler 3 includes, in addition to titanium dioxide, an inorganic compound usually used as a filler for paper, such as light calcium carbonate, heavy calcium carbonate, kaolin, talc, clay, white carbon and aluminum hydroxide. The filler 3 may include a filler derived from waste paper.

In the paper stock preparation step S1, the filler 3 is added so that the content rate of titanium dioxide in the paper stock is 1% by mass or more based on the total mass of the solid content in the pulp fiber 4 and the filler 3. Furthermore, the filler 3 is added so that the content rate of ash such as titanium dioxide, clay and calcium carbonate in the resulting paper with high filler content is 8.5% by mass or more and 50% by mass or less. Inclusion of highly light scattering titanium dioxide in a paper stock as the filler 3 allows titanium dioxide to be fixed on the pulp fiber 4, and thus high opacity can be provided. Meanwhile, the upper limit of the content rate of titanium dioxide in the paper stock is not particularly limited, and may be 50% by mass or less based on the total mass of the solid content in the pulp fiber and the filler.

Titanium dioxide added in the paper stock preparation step S1 may be anatase form or rutile form. Titanium dioxide coated with alumina or silica may also be used. Furthermore, when titanium dioxide is added to the paper stock, a slurry prepared by dispersing titanium dioxide in water may be used. To obtain a slurry in which titanium dioxide is homogeneously dispersed, a dispersant such as sodium polyacrylate may or may not be used.

In the paper stock preparation step S1, the filler 3 is added so that the content rate of the filler 3 including titanium dioxide in the paper stock is 8.5% by mass or more and 50% by mass or less based on the total mass of the solid content in the pulp fiber 4 and the filler 3. By setting the content rate of the filler 3 to 8.5% by mass or more based on the total mass of the solid content in the pulp fiber 4 and the filler 3, a paper with high filler content having the desired high opacity can be easily obtained. Thus, the content rate of the filler 3 is preferably more than 10% by mass, more preferably more than 20% by mass, and further preferably more than 35% by mass based on the total mass of the solid content in the pulp fiber 4 and the filler 3. Meanwhile, by setting the content rate of the filler 3 to 50% by mass or less based on the total mass of the solid content in the pulp fiber 4 and the filler 3, reduction of strength and printability and an increase in the raw material cost due to excessive inclusion of the filler 3 can be suppressed.

Furthermore, it is preferable that in the paper stock preparation step S1, aluminum sulfate is added to pulp slurry in an amount of 0.5% by mass or more and 10% by mass or less based on the total mass of the solid content in the pulp fiber 4 and the filler 3 after adding the filler 3 including titanium dioxide to pulp slurry. This can facilitate fixation of the filler 3 on the pulp fiber 4.

In the paper stock preparation step S1, after adding the filler 3 including titanium dioxide to pulp slurry, polyamine polyamide, which is a wet strengthening agent, a sizing agent such as ASA and AKD, a rosin solution/ emulsion, polyethyleneimine, which is a cationic charge control agent, polyDADMAC, polyamine epichlorohydrin resin and cationic polyacrylamide may also be added to pulp slurry. Other chemicals including an aluminum compound such as polyaluminum chloride and sodium aluminate, a natural and/ or synthetic paper strength agent, a dispersant, a dye, a pigment, a defoaming agent, a pH adjuster and the like may also be added to pulp slurry.

Aluminum sulfate, a wet strengthening agent, a sizing agent, a cationic charge control agent, an aluminum compound, a natural and/ or synthetic paper strength agent, a dispersant, a dye, a pigment, a defoaming agent, a pH adjuster and the like may be added to the paper stock after the amphoteric polyacrylamide addition step S2 described later.

### (Amphoteric polyacrylamide addition step S2)

In the amphoteric polyacrylamide addition step S2, 0.005% by mass or more and 3% by mass or less of the amphoteric polyacrylamide 2 is added to the paper stock based on the total mass of the solid content in the pulp fiber and the filler 3.

A copolymer prepared by polymerizing monomers including (a) (meth)acrylamide, (b) an anionic vinyl monomer, and (c) a cationic vinyl monomer may be used as amphoteric polyacrylamide 2. Since an anionic functional group and a cationic functional group are present in the same molecule in the amphoteric polyacrylamide 2 of such a copolymer, their mutual action and reaction with the filler 3 such as titanium allows the filler 3 and the amphoteric polyacrylamide 2 to be dispersed without excessive coagulation and easily fixed on the surface of the pulp fiber 4, and thus opacity of the paper with high filler content can be increased. Furthermore, since this promotes fixation of the filler 3 on the surface of the pulp fiber 4, the ash content of the paper with high filler content can be increased and the concentration of the filler 3 in white water can be effectively reduced. As a result, contamination of machinery due to white water is reduced, the effect of filtration is improved, and productivity such as machine speed can also be improved.

Of the monomers, the (a) (meth)acrylamide refers to acrylamide and methacrylamide. At least one of the two may be used as the monomer. In particular, to reduce the cost of raw materials, it is preferable to use acrylamide as the monomer. "(Meth)" in the present description means to include both of those described with "meth" (e.g., methacryl) and those described without "meth" (e.g., acryl).

The content of the (a) acrylamide in the amphoteric polyacrylamide 2 is in the range of 60% by mole or more and 98% by mole or less, preferably 70% by mole or more and 94% by mole or less, and more preferably 80% by mole or more and 90% by mole or less, based on the total number of moles of the constituent monomers. By increasing the content of the (a) acrylamide at that stage, the filler 3, in particular titanium oxide, can be fixed on the pulp fiber 4, and the effect of improving opacity can be easily obtained.

Examples of the (b) anionic vinyl monomers include α,β-unsaturated monobasic acid such as (meth)acrylic acid, crotonic acid and (meth)allyl carboxylic acid, α,β-unsaturated dibasic acid such as maleic acid, fumaric acid, itaconic acid and muconic acid and organic sulfonic acid such as vinyl sulfonic acid, styrene sulfonic acid, 2-acrylamide-2-methylpropane sulfonic acid and (meth)allyl sulfonic acid, and an alkali metal salt such as sodium salt and potassium salt and an ammonium salt of such organic acids. One or two or more of the compounds may be used as the (b) anionic vinyl monomer. Of them, acrylic acid and itaconic acid are preferably used as the (b) anionic vinyl monomer.

The content of the (b) anionic vinyl monomer in the amphoteric polyacrylamide 2 is in the range of 1% by mole or more and 39% by mole or less, preferably 3% by mole or more and 27% by mole or less, and more preferably 2% by mole or more and 18% by mole or less based on the total number of moles of the constituent monomers.

Examples of the (c) cationic vinyl monomers include a tertiary amino group-containing vinyl monomer such as dimethylaminoethyl (meth)acrylate, diethylaminoethyl (meth)acrylate, dimethylaminopropyl (meth)acrylamide and diethylaminopropyl (meth)acrylamide and hydrochloride, sulfate, acetate or organic acid salt thereof, and a vinyl monomer containing quaternary ammonium salt prepared by the reaction between the above tertiary amino group-containing vinyl monomer and a quaternizing agent such as methyl chloride, benzyl chloride, dimethyl sulfuric acid and epichlorohydrin.

The content of the (c) cationic vinyl monomer in the amphoteric polyacrylamide 2 is in the range of 1% by mole or more and 39% by mole or less, preferably 3% by mole or more and 27% by mole or less, and more preferably 2% by mole or more and 18% by mole or less based on the total number of moles of the constituent monomers.

The molar ratio of the (b) anionic vinyl monomer to the (c) cationic vinyl monomer is in the range of preferably 0.1 or more to 39 or less, more preferably 0.1 or more and 20 or less, and further preferably 0.1 or more and 10 or less. By setting the molar ratio to the above range, the filler 3 can be fixed on the surface of the pulp fiber 4 in the form of more homogeneous dispersion.

Amphoteric polyacrylamide 2 may also include N-substituted (meth)acrylamides represented by the following general formula (I) and/or a multifunctional monomer in addition to the (a) (meth)acrylamide, the (b) anionic vinyl monomer and the (c) cationic vinyl monomer.

CH₂=C(R¹)-CONR²(R³) Formula (I)

in which R¹ is a hydrogen atom or a methyl group, R² is a hydrogen atom or a linear or branched alkyl group having 1 to 4 carbon atoms and R³ is a linear or branched alkyl group having 1 to 4 carbon atoms.

For N-substituted (meth)acrylamides represented by the general formula (I), the methyl group and the methylene group in the N-alkyl group act as the site of chain transfer and this introduces many branched structures into amphoteric polyacrylamide 2, and therefore a branched polymer can be prepared without gelation.

Examples of linear or branched alkyl groups having 1 to 4 carbon atoms in R² and R³ in the general formula (I) include a methyl group, an ethyl group, an isopropyl group and a t-butyl group. Examples of N-substituted (meth)acrylamides include N, N-dimethyl (meth)acrylamide, N-isopropyl (meth)acrylamide, N-methyl (meth)acrylamide, N-ethyl (meth)acrylamide, N-isopropyl (meth)acrylamide and N-t-butyl (meth)acrylamide. Of them, N, N-dimethyl (meth)acrylamide is preferred from the viewpoint of copolymerizability and chain transfer properties.

A cross-linked structure may be formed in amphoteric polyacrylamide 2 using a multifunctional monomer. Examples of multifunctional monomers include a di(meth)acrylate such as ethylene glycol di(meth)acrylate, diethylene glycol di(meth)acrylate and triethylene glycol di(meth)acrylate, a bis(meth)acrylamide such as methylene bis(meth)acrylamide, ethylene bis(meth)acrylamide and hexamethylene bis(meth)acrylamide, a divinyl ester such as divinyl adipate and divinyl sebacate, a di-functional vinyl monomer such as allyl methacrylate, diallylamine, diallyldimethylammonium, diallyl phthalate, diallyl chlorendate, divinyl benzene and N,N-diallylacrylamide, a trifunctional vinyl monomer such as 1,3,5-triacryloylhexahydro-S-triazine, triallyl isocyanurate, triallylamine and triallyl trimellitate, a tetrafunctional vinyl monomer such as tetramethylolmethane tetraacrylate, tetraallyl pyromellitate, N,N,N',N'-tetraallyl-1,4-diaminobutane, tetraallylamine salt and tetraallyloxyethane, and N-methylolacrylamide. Of these multifunctional monomers, it is preferable to use 1,3,5-triacryloylhexahydro-S-triazine, triallyl isocyanurate and the like.

The content of N-substituted (meth)acrylamides represented by the general formula (I) and the multifunctional monomer in amphoteric polyacrylamide 2 is preferably 10% by mole or less, and more preferably 5% by mole or less based on the total number of moles of the constituent monomers, respectively. Meanwhile the lower limit of the content of N-substituted (meth)acrylamides represented by the general formula (I) is preferably 0.1% by mole or more, and more preferably 0.5% by mole or more based on the total number of moles of the constituent monomers so as to make N-substituted (meth)acrylamides effective.

The monomer for amphoteric polyacrylamide 2 may also include a nonionic vinyl monomer such as alkyl ester (whose alkyl group has 1 to 8 carbon atoms) of a monomer similar to the (b) anionic vinyl monomer, acrylonitrile, styrene, vinyl acetate and methylvinyl ether so as to confer hydrophobicity. In this regard, the content of the nonionic vinyl monomer included is preferably 30% by mole or less, and more preferably 20% by mole or less based on the total number of moles of the constituent monomers.

It is preferable that the amphoteric polyacrylamide 2 is prepared, before the amphoteric polyacrylamide addition step S2, in an amphoteric polyacrylamide preparation step S11 of copolymerizing the above monomers in an aqueous medium. The amphoteric polyacrylamide preparation step S11 may be performed immediately before the amphoteric polyacrylamide addition step S2. Alternatively, the amphoteric polyacrylamide preparation step S11 may be previously performed to prepare amphoteric polyacrylamide 2, and then the amphoteric polyacrylamide 2 may be used in the amphoteric polyacrylamide addition step S2.

A known radical polymerization method may be used in the amphoteric polyacrylamide preparation step S11 as a method of copolymerization in which monomers are polymerized to prepare amphoteric polyacrylamide 2. Any of bulk polymerization, precipitation polymerization in an aqueous solution, suspension polymerization and emulsion polymerization may be used. When monomers are polymerized in a solution including an aqueous medium (solvent), the concentration of monomers in the solution is in the range of preferably 5% by mass or more and 80% by mass or less, and more preferably 5% by mass or more and 40% by mass or less.

A known radical polymerization initiator may be used as a polymerization initiator for polymerizing monomers in the amphoteric polyacrylamide preparation step S11. Examples of radical polymerization initiators include ammonium persulfate, while an azo compound may be used as a radical polymerization initiator. Polymerization reaction is usually performed in a stream of inert gas at a temperature of 30°C or more and 100°C or less. The resulting copolymer may be directly used, or may be diluted to a solution with an aqueous medium (solvent) such as water and alcohols.

Preferably, the amphoteric polyacrylamide 2 prepared in amphoteric polyacrylamide preparation step S21 has a Brookfield viscosity at a solid concentration of 10% by mass of 1,000 cps or more and 20,000 cps or less. This allows the filler 3 and the amphoteric polyacrylamide 2 to be easily dispersed and thus opacity of paper with high filler content can be further improved.

In the amphoteric polyacrylamide addition step S2, 0.005% by mass or more and 3% by mass or less, preferably 0.01% by mass or more and 1% by mass or less of the amphoteric polyacrylamide 2 is added based on the total mass of the solid content in the pulp fiber and the filler 3. This promotes the filler 3 to be dispersed and fixed on the pulp fiber 4.

In the amphoteric polyacrylamide addition step S2, a retention aid other than the amphoteric polyacrylamide 2 may be added to the paper stock. Examples of retention aids include anionic high molecular weight polyacrylamide, cationic high molecular weight polyacrylamide, amphoteric high molecular weight polyacrylamide, silica sol and bentonite. One of the retention aids may be used alone or two or more retention aids may be used in combination.

The pH of the paper stock after the amphoteric polyacrylamide addition step S2 may be in the range of, for example, 4 or more and 9 or less.

### (Papermaking step S3)

The papermaking step S3 is for making paper from the paper stock to which the amphoteric polyacrylamide 2 is added. This provides paper with high filler content having high ash content and high opacity.

A known method may be used in the papermaking step S3. It is preferable to make paper immediately after the amphoteric polyacrylamide addition step S2 described above so as to suppress formation of flock (small bulk) on the paper stock. In particular, it is more preferable to perform papermaking immediately after the amphoteric polyacrylamide addition step S2 described above at a site near the wire part for papermaking in the papermaking system. More specifically, it is further preferable that the amphoteric polyacrylamide addition step S2 described above is performed at the suction port of the fan pump in the papermaking system in order to improve water filtration of the paper with high filler content and paper strengthening effects.

### (Paper with high filler content)

The paper with high filler content produced by the method of the present invention has high ash content and high opacity. In this regard, the value of the ash content and the value of the opacity vary depending on the type of products of the paper with high filler content.

The paper with high filler content produced by the method of the present invention has ash content (ash content in paper) of usually 8.5% by mass or more and 50% by mass or less, and typically 18% by mass or more and 50% by mass or less. Examples of ash may be the same as the compounds of the filler 3 described above. The method of the present invention can provide a paper with high filler content having high opacity and high whiteness in such a wide range of ash content in paper. In particular, the method of the present invention can provide a paper with high filler content in which ash is fixed on pulp fiber in the form of dispersion even when paper has high ash content, and thus can offer good physical properties such as high opacity and whiteness.

Furthermore, the paper with high filler content obtained by the method of the present invention is likely to have high opacity when the content rate of the filler 3 in paper is high. The paper with high filler content has an opacity of usually 70.0% or more, and may have an opacity of 81.5% or more as measured according to JIS P8149. Since the present invention can provide a paper with high filler content and high opacity, the paper can be suitably used in applications such as construction paper and india paper.

The opacity of the paper with high filler content may be adjusted, for example, by changing the content rate of the filler 3 in paper. In this regard, although titanium dioxide, which is the filler 3, has a greater effect of increasing opacity than other the fillers 3, since titanium dioxide is expensive, the raw material cost is likely to be increased. Thus, it is preferable that the content rate of titanium dioxide in paper is small in order to reduce the raw material cost of the paper with high filler content. Examples of methods of reducing the content rate titanium dioxide include avoiding excessive increase of the opacity of the paper with high filler content and using a material more inexpensive than titanium dioxide as the filler 3.

The method of the present invention significantly reduces turbidity of the filtrate of white water according to JIS K0101 after obtaining the paper with high filler content. This reduces the content of filler which is not fixed on pulp fiber in the white water, and thus contamination of papermaking machine and related apparatus is reduced and environmental load and economic load can be suppressed.

### EXAMPLES

Hereinafter the present invention will be described in detail, but the present invention is not limited thereto.

### <Preparation of amphoteric polyacrylamide>

A 1L four-neck flask equipped with a stirrer, a condenser, a dropping tube, a thermometer and a nitrogen gas introduction tube was charged with a monomer including (meth)acrylamide, an anionic vinyl monomer and a cationic vinyl monomer whose type and ratio are as described in Table 1, a suitable amount of a cross-linking agent, a chain transfer agent, a pH adjuster and ion-exchanged water so that the concentration of the monomer was 11% by mass. Nitrogen gas was passed through the resulting monomer solution to remove oxygen in the solution. Next, the system was heated to 60°C and 1 part by mass of a 2% by mass ammonium persulfate aqueous solution was added to 889 parts by mass of the monomer solution as a polymerization initiator while stirring. Then the temperature of the system was increased to 90°C and by keeping the system for 2 hours the monomer was polymerized to prepare amphoteric polyacrylamide (Polymers A to G). After completion of the polymerization of the monomer, the solid concentration was adjusted to the value shown in Table 1 by adding 100 parts by mass of ion-exchanged water to the solution to give an amphoteric polyacrylamide aqueous solution.

For the viscosity of the resulting amphoteric polyacrylamide aqueous solution, Brookfield viscosity was measured using a Brookfield viscometer at a liquid temperature of 25°C. The pH of the resulting amphoteric polyacrylamide aqueous solution was measured by a pH meter. The results are shown in Table 1.

**[Table 1]**

| | Ratio of monomer mixed (% by mole based on total number of moles of constituent monomers) | | | | | | | | | Amphoteric polyacrylamide aqueous solution | | |
|---|---|---|---|---|---|---|---|---|---|---|---|---|
| | (a) (Meth)acryl amide | (b) Anionic vinyl monomer | | | (c) Cationic vinyl monomer | | | Total of (b)/ Total of (c) | Total | Solid content (% by mass) | Viscosity (cps) | pH |
| | Acrylamide | Acrylic acid | Itaconic acid | Total of (b) | Dimethylaminoethyl acrylate | Dimethylaminoethyl methacrylate | Total of (c) | | | | | |
| Polymer A | 85 | 11 | 0 | 11 | 4 | 0 | 4 | 2.75 | 100 | 10 | 6100 | 4.2 |
| Polymer B | 90 | 0 | 5 | 5 | 5 | 0 | 5 | 1.00 | 100 | 10 | 8200 | 3.8 |
| Polymer C | 90 | 0 | 5 | 5 | 4 | 1 | 5 | 1.00 | 100 | 10 | 6780 | 3.9 |
| Polymer D | 80 | 15 | 0 | 15 | 5 | 0 | 5 | 3.00 | 100 | 10 | 12800 | 4.1 |
| Polymer E | 80 | 0 | 8 | 8 | 12 | 0 | 12 | 0.67 | 100 | 10 | 5650 | 4.1 |
| Polymer F | 80 | 2 | 0 | 2 | 18 | 0 | 18 | 0.11 | 100 | 10 | 10800 | 3.8 |
| Polymer a | 80 | 18 | 0 | 18 | 2 | 0 | 2 | 9.00 | 100 | 10 | 11700 | 5.0 |

### <Test Example 1>

### [Present Examples 1 to 9]

Bleached softwood kraft pulp and bleached hardwood kraft pulp were mixed at a mass ratio of 2:8, and water was added thereto to prepare a pulp slurry with a concentration of solid content of 2.0% by mass. For pulp in the pulp slurry, Canadian Standard Freeness (CSF) was adjusted to 400 mL using a laboratory use Niagara beater.

Subsequently, in the paper stock preparation step S1, 50% by mass of anatase titanium dioxide (which had been previously formed into a slurry with a solid content of 20% and stored while stirring) was added to the pulp slurry as a filler based on the total mass of the solid content in pulp fiber and the filler. Next, 1.0% by mass of aluminum sulfate based on the total mass of the solid content in pulp fiber and the filler and a necessary chemical component such as a wet strengthening agent (made by Kurita Water Industries, Ltd., trade name Giluton WS12) were added thereto to give a paper stock. At that stage, the mass ratio of pulp fiber: titanium dioxide is 1:1. Part of the paper stock was fractioned and turbidity of the filtrate was evaluated.

Furthermore, in the amphoteric polyacrylamide addition step S2, the amphoteric polyacrylamide aqueous solution of one of polymers A to G described in Table 2 was added to the paper stock so that the content was as described in Table 2.

In the papermaking step S3, papermaking was performed using the paper stock to which the amphoteric polyacrylamide aqueous solution had been added by Sheet Machine (Model No.2556-I) made by Kumagaya Riki Kogyo Co., Ltd. to give a wet paper with a basis weight of about 50 g/m². The resulting wet paper was pressed and then dried using a drum dryer at 110°C for 90 minutes to give a hand-made paper (Present Examples 1 to 9). Optical properties of the hand-made paper were evaluated.

For the evaluation of turbidity of the filtrate of the paper stock, 1,000 ml of the paper stock after the amphoteric polyacrylamide addition step S2 was poured into DFR-05 made by BTG, and after adding the amphoteric polyacrylamide aqueous solution thereto in the amount described in Table 2, the solution was stirred at a rotational speed of 1,000 rpm for 40 seconds. 200 ml of the solution was collected and suction-filtered through a filter with a pore diameter of 20 µm, and 12 ml of the resulting filtrate was collected and turbidity was measured. A lower value of turbidity indicates that the amount of particles of highly light scattering filler such as fine fiber and titanium dioxide in the filtrate is small, showing that particles of filler such as titanium dioxide are fixed on fiber which is to be formed into paper. The results are shown in Table 2.

The basis weight of the hand-made paper was measured, and the ash content and the opacity of the paper were evaluated after conditioning in a constant temperature and humidity room at a temperature of 23°C and a relative humidity of 50% overnight. The basis weight was determined from the area and the mass of the hand-made paper after conditioning. The ash content in the paper was measured according to JIS P8251:2003. The opacity was measured according to JIS P8149:2000. The results are shown in Table 2.

### [Comparative Example 1]

Hand-made paper was prepared from the paper stock in the same manner as in Example 1 except for not adding the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 2,

### [Comparative Example 2]

Hand-made paper was prepared from the paper stock in the same manner as in Example 1 except for adding a cationic retention aid Hiholder 721 (a copolymer of acrylamide and dimethylaminoethyl acrylate made by Kurita Water Industries, Ltd.) in the amount shown in Table 2 instead of the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 2,

### [Comparative Example 3]

Hand-made paper was prepared from the paper stock in the same manner as in Example 1 except for adding an anionic retention aid Hiholder A505 (a copolymer of acrylamide and acrylic acid made by Kurita Water Industries, Ltd.) in the amount shown in Table 2 instead of the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 2,

**[Table 2]**

| | Paper stock preparation step (S1) | | | Amphoteric polyacrylamide addition step (S2) | | Paper stock | Paper with high filler content (hand-made paper) | | |
|---|---|---|---|---|---|---|---|---|---|
| | Content rate of filler including titanium dioxide based on total mass of solid content in pulp fiber and filler (% by mass) | Content rate of titanium dioxide based on total mass of solid content in pulp fiber and filler (% by mass) | Content rate of aluminum sulfate based on total mass of solid content in pulp fiber and filler (% by mass) | Type of amphoteric polyacrylamide aqueous solution | Amount of amphoteric polyacrylamide added based on total mass of solid content in pulp fiber and filler (% by mass) | Turbidity of filtrate (NTU) | Basis weight (g/cm²) | Ash content in paper (%) | Opacity (%) |
| Present Example 1 | 50 | 50 | 1.0 | Polymer A | 0.05 | 2760 | 74.6 | 39.5 | 95.2 |
| Present Example 2 | 50 | 50 | 1.0 | Polymer B | 0.05 | 2830 | 74.3 | 39.1 | 94.7 |
| Present Example 3 | 50 | 50 | 1.0 | Polymer C | 0.05 | 2480 | 76.1 | 41.6 | 95.9 |
| Present Example 4 | 50 | 50 | 1.0 | Polymer D | 0.05 | 2501 | 75.8 | 40.3 | 95.6 |
| Present Example 5 | 50 | 50 | 1.0 | Polymer E | 0.05 | 2666 | 75.3 | 39.3 | 94.9 |
| Present Example 6 | 50 | 50 | 1.0 | Polymer F | 0.05 | 2939 | 75.1 | 38.0 | 94.1 |
| Present Example 7 | 50 | 50 | 1.0 | Polymer G | 0.05 | 2515 | 75.5 | 39.3 | 94.8 |
| Present Example 8 | 50 | 50 | 1.0 | Polymer C | 0.025 | 3850 | 74.0 | 30.1 | 94..5 |
| Present Example 9 | 50 | 50 | 1.0 | Polymer C | 0.15 | 1280 | 79.7 | 45.1 | 97.1 |
| Comparative Example 1 | 50 | 50 | 1.0 | **Not added** | **0** | 10370 | 70.1 | **26.3** | **92.3** |
| Comparative Example 2 | 50 | 50 | 1.0 | **Copolymer of acrylamide and dimethylamin oethyl acrylate** | 0.025 | 2185 | 73.9 | 34.2 | **92.9** |
| Comparative Example 3 | 50 | 50 | 1.0 | **Copolvmer of acrvlamide and acrylic acid** | 0.025 | 1832 | 75.2 | 39.8 | **93.4** |

| | | | | | | | | | |
|---|---|---|---|---|---|---|---|---|---|
| (Note) Bold and underlined texts in Table indicate that those are out of scope of present invention | | | | | | | | | |

Referring to the results of Table 2, in the method for producing a paper with high filler content of Present Examples 1 to 9, the conditions for the paper stock preparation step (S1) and the amphoteric polyacrylamide addition step (S2) are in the appropriate range of the present invention, and the paper stock after the amphoteric polyacrylamide addition step (S2) has a turbidity of the filtrate of 4,000 NTU or less and the resulting paper with high filler content has an ash content of 30% or more and an opacity of 94% or more. This shows that the method of Present Examples 1 to 9 provides a paper with high filler content having high ash content and high opacity.

By contrast, although the amount of the filler added was the same as that in Present Examples 1 to 9 in the method for producing a paper with high filler content of Comparative Examples 1 to 3, the conditions for the amphoteric polyacrylamide addition step (S2) were out of the appropriate range of the present invention, and at least one of the ash content and the opacity of the resulting paper with high filler content fell short of the mark.

### <Test Example 2>

### [Present Examples 10 to 18]

In the paper stock preparation step S1, 30% by mass of anatase titanium dioxide (which had been previously formed into a slurry with a solid content of 20% and stored while stirring) was added to the pulp slurry as a filler based on the total mass of the solid content in pulp fiber and the filler. Next, 1.0% by mass of aluminum sulfate based on the total mass of the solid content in pulp fiber and the filler and a necessary chemical component such as a wet strengthening agent (made by Kurita Water Industries, Ltd., trade name Giluton WS 12) were added thereto to give a paper stock. At that stage, the mass ratio of pulp fiber: titanium dioxide is 3:7

Furthermore, for Examples 17, 18, in the amphoteric polyacrylamide addition step S2, the amphoteric polyacrylamide aqueous solution of polymer D was added to the paper stock so that the content was as described in Table 3.

Hand-made paper was prepared from the paper stock in the same manner as in Examples 1 to 9 except the above. Then turbidity of the filtrate of the paper stock and the basis weight of the hand-made paper were measured, and ash content in paper and opacity were evaluated. The results are shown in Table 3.

### [Comparative Example 4]

Hand-made paper was prepared from the paper stock in the same manner as in Example 10 except for not adding the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 3.

### [Comparative Example 5]

Hand-made paper was prepared from the paper stock in the same manner as in Example 10 except for adding a cationic retention aid Hiholder 721 (a copolymer of acrylamide and dimethylaminoethyl acrylate made by Kurita Water Industries, Ltd.) in the amount shown in Table 3 instead of the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 3.

### [Comparative Example 6]

Hand-made paper was prepared from the paper stock in the same manner as in Example 10 except for adding an anionic retention aid Hiholder A505 (a copolymer of acrylamide and acrylic acid made by Kurita Water Industries, Ltd.) in the amount shown in Table 3 instead of the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 3.

**[Table 3]**

| | Paper stock preparation step (S1) | | | Amphoteric polyacrylamide addition step (S2) | | Paper stock | Paper with high filler content (hand-made paper) | | |
|---|---|---|---|---|---|---|---|---|---|
| | Content rate of filler including titanium dioxide based on total mass of solid content in pulp fiber and filler (% by mass) | Content rate of titanium dioxide based on total mass of solid content in pulp fiber and filler (% by mass) | Content rate of aluminum sulfate based on total mass of solid content in pulp fiber and filler (% by mass) | Type of amphoteric polyacrylamide aqueous solution | Amount of amphoteric polyacrylamide added based on total mass of solid content in pulp fiber and filler (% by mass) | Turbidity of filtrate (NTU) | Basis weight (g/cm²) | Ash content in paper (%) | Opacity (%) |
| Present Example 10 | 30 | 30 | 1.0 | Polymer A | 0.05 | 1356 | 63.3 | 24.1 | 83.2 |
| Present Example 11 | 30 | 30 | 1.0 | Polymer B | 0.05 | 1510 | 64 | 23.1 | 81.9 |
| Present Example 12 | 30 | 30 | 1.0 | Polymer C | 0.05 | 1265 | 63.9 | 24.5 | 84.0 |
| Present Example 13 | 30 | 30 | 1.0 | Polymer D | 0.05 | 1171 | 65.1 | 26.1 | 85.7 |
| Present Example 14 | 30 | 30 | 1.0 | Polymer E | 0.05 | 1390 | 64.8 | 23.7 | 83.5 |
| Present Example 15 | 30 | 30 | 1.0 | Polymer F | 0.05 | 1472 | 63.7 | 23.2 | 83.1 |
| Present Example 16 | 30 | 30 | 1.0 | Polymer G | 0.05 | 1314 | 60.3 | 23.1 | 82.4 |
| Present Example 17 | 30 | 30 | 1.0 | Polymer D | 0.025 | 1668 | 66.3 | 19.8 | 84.7 |
| Present Example 18 | 30 | 30 | 1.0 | Polymer D | 0.15 | 1280 | 57.1 | 27.8 | 86.4 |
| Comparative Example 4 | 30 | 30 | 1.0 | **Not added** | **0** | 807 | 59.2 | **17.7** | **79.3** |
| Comparative Example 5 | 30 | 30 | 1.0 | **Copolymer of acrylamide and dimethylami noethyl acrylate** | 0.025 | 1375 | 64.4 | 21.6 | **80.6** |
| Comparative Example 6 | 30 | 30 | 1.0 | **Copolymer of acrylamide and acrylic acid** | 0.025 | 1032 | 67.4 | 23.3 | **81.1** |

| | | | | | | | | | |
|---|---|---|---|---|---|---|---|---|---|
| (Note) Bold and underlined texts in Table indicate that those are out of scope of present invention | | | | | | | | | |

Referring to the results of Table 3, in the method for producing a paper with high filler content of Present Examples 10 to 18, the conditions for the paper stock preparation step (S1) and the amphoteric polyacrylamide addition step (S2) are in the appropriate range of the present invention, and the paper stock after the amphoteric polyacrylamide addition step (S2) has a turbidity of the filtrate of 2,000 NTU or less and the resulting paper with high filler content has an ash content of 18% or more and an opacity of 81.5% or more. This shows that the method of Present Examples 10 to 18 provides a paper with high filler content having high ash content and high opacity.

By contrast, although the amount of the filler added was the same as that in Present Examples 10 to 18 in the method for producing a paper with high filler content of Comparative Examples 4 to 6, the condition for the amphoteric polyacrylamide addition step (S2) were out of the appropriate range of the present invention, and at least one of the ash content and the opacity of the resulting paper with high filler content fell short of the mark.

### <Test Example 3>

### [Present Examples 19 to 27]

In the paper stock preparation step S1, 12% by mass of anatase titanium dioxide (which had been previously formed into a slurry with a solid content of 20% and stored while stirring) was added to the pulp slurry as a filler based on the total mass of the solid content in pulp fiber and the filler. Next, 1.0% by mass of aluminum sulfate based on the total mass of the solid content in pulp fiber and the filler and a necessary chemical component such as a wet strengthening agent (made by Kurita Water Industries, Ltd. trade name Giluton WS 12) were added thereto to give a paper stock. At that stage, the mass ratio of pulp fiber: titanium dioxide is 12:88.

Furthermore, for Examples 26, 27, in the amphoteric polyacrylamide addition step S2, the amphoteric polyacrylamide aqueous solution of polymer G was added to the paper stock so that the content was as described in Table 4.

Hand-made paper was prepared from the paper stock in the same manner as in Examples 1 to 9 except the above. Then turbidity of the filtrate of the paper stock and the basis weight of the hand-made paper were measured, and ash content in paper and opacity were evaluated. The results are shown in Table 4.

### [Comparative Example 7]

Hand-made paper was prepared from the paper stock in the same manner as in Example 19 except for not adding the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 4.

### [Comparative Example 8]

Hand-made paper was prepared from the paper stock in the same manner as in Example 19 except for adding a cationic retention aid Hiholder 721 (a copolymer of acrylamide and dimethylaminoethyl acrylate made by Kurita Water Industries, Ltd.) in the amount shown in Table 4 instead of the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 4.

### [Comparative Example 9]

Hand-made paper was prepared from the paper stock in the same manner as in Example 19 except for adding an anionic retention aid Hiholder A505 (a copolymer of acrylamide and acrylic acid made by Kurita Water Industries, Ltd.) in the amount shown in Table 4 instead of the amphoteric polyacrylamide aqueous solution in the amphoteric polyacrylamide addition step S2. Then turbidity of the filtrate of the paper stock and the basis weight of the hand-made paper were measured, and ash content in paper and opacity were evaluated. The results are shown in Table 4.

**[Table 4]**

| | Paper stock preparation step (S1) | | | Amphoteric polyacrylamide addition step (S2) | | Paper stock | Paper with high filler content (hand-made paper) | | |
|---|---|---|---|---|---|---|---|---|---|
| | Content rate of filler including titanium dioxide based on total mass of solid content in pulp fiber and filler (% by mass) | Content rate of titanium dioxide based on total mass of solid content in pulp fiber and filler (% by mass) | Content rate of aluminum sulfate based on total mass of solid content in pulp fiber and filler (% by mass) | Type of amphoteric polyacrylamide aqueous solution | Amount of amphoteric polyacrylamide added based on total mass of solid content in pulp fiber and filler (% by mass) | Turbidity of filtrate (NTU) | Basis weight (g/cm²) | Ash content in paper (%) | Opacity (%) |
| Present Example 19 | 12 | 12 | 1.0 | Polymer A | 0.05 | 651 | 60.7 | 9.4 | 72.1 |
| Present Example 20 | 12 | 12 | 1.0 | Polymer B | 0.05 | 682 | 60.5 | 9.2 | 71.6 |
| Present Example 21 | 12 | 12 | 1.0 | Polymer C | 0.05 | 632 | 60.9 | 9.5 | 72.9 |
| Present Example 22 | 12 | 12 | 1.0 | Polymer D | 0.05 | 582 | 61.7 | 10.2 | 74.2 |
| Present Example 23 | 12 | 12 | 1.0 | Polymer E | 0.05 | 625 | 61.6 | 9.7 | 72.8 |
| Present Example 24 | 12 | 12 | 1.0 | Polymer F | 0.05 | 677 | 61.3 | 9.3 | 71.8 |
| Present Example 25 | 12 | 12 | 1.0 | Polymer G | 0.05 | 553 | 62.6 | 10.3 | 74.5 |
| Present Example 26 | 12 | 12 | 1.0 | Polymer G | 0.025 | 836 | 59.9 | 8.9 | 70.8 |
| Present Example 27 | 12 | 12 | 1.0 | Polymer G | 0.15 | 439 | 64.0 | 11.3 | 78.2 |
| Comparative Example 7 | 12 | 12 | 1.0 | **Not added** | **0** | 807 | 55.2 | **8.1** | **66.7** |
| Comparative Example 8 | 12 | 12 | 1.0 | **Copolvmer of acrvlamide and dimethylaminoe thyl acrylate** | 0.025 | 622 | 60.1 | 9.8 | **69.3** |
| Comparative Example 9 | 12 | 12 | 1.0 | **Copolvmer of acrvlamide and acrylic acid** | 0.025 | 548 | 62.8 | 10.5 | **69.8** |

| | | | | | | | | | |
|---|---|---|---|---|---|---|---|---|---|
| (Note) Bold and underlined texts in Table indicate that those are out of scope of present invention | | | | | | | | | |

Referring to the results of Table 4, in the method for producing a paper with high filler content of Present Examples 19 to 27, the conditions for the paper stock preparation step (S1) and the amphoteric polyacrylamide addition step (S2) are in the appropriate range of the present invention, and the paper stock after the amphoteric polyacrylamide addition step (S2) has a turbidity of the filtrate of 1,000 NTU or less and the resulting paper with high filler content has an ash content of 8.5% or more and an opacity of 70% or more. This shows that the method of Present Examples 19 to 27 provides a paper with high filler content having high ash content and high opacity.

By contrast, although the amount of the filler added was the same as that in Present Examples 19 to 27 in the method for producing a paper with high filler content of Comparative Examples 7 to 9, the conditions for the amphoteric polyacrylamide addition step (S2) were out of the appropriate range of the present invention, and at least one of the ash content and the opacity of the resulting paper with high filler content fell short of the mark.

The above shows that the method for producing a paper with high filler content of Present Examples can provide a paper having high ash content and high opacity with small ratio of filler flowing into the white water compared to the method of Comparative Examples in which the same amount of filler including titanium dioxide is added.

### Reference Signs List

- 1, 9: Paper stock
- 2: Amphoteric polyacrylamide
- 3: Filler
- 4: Pulp fiber
- 5: Retention aid
- S1: Paper stock preparation step
- S11: Amphoteric polyacrylamide preparation step
- S2: Amphoteric polyacrylamide addition step
- S3: Papermaking step

## Claims

1. A method for producing a paper with high filler content, comprising: a paper stock preparation step of adding a filler comprising titanium dioxide to a pulp slurry to give a paper stock; an amphoteric polyacrylamide addition step of adding amphoteric polyacrylamide to the paper stock in an amount of 0.005% by mass or more and 3% by mass or less based on the total mass of the solid content in pulp fiber and the filler; and a papermaking step of making paper from the paper stock to which the amphoteric polyacrylamide is added, wherein in the paper stock obtained in the paper stock preparation step, a content rate of the titanium dioxide is 1% by mass or more and a content rate of the filler comprising titanium dioxide is 8.5% by mass or more and 50% by mass or less based on the total mass of the solid content in the pulp fiber and the filler.

2. The method for producing a paper with high filler content according to claim 1, wherein in the paper stock preparation step, aluminum sulfate is further added in an amount of 0.5% by mass or more and 10% by mass or less based on the total mass of the solid content in the pulp fiber and the filler.

3. The method for producing a paper with high filler content according to claim 1 or 2, further comprising, before the amphoteric polyacrylamide addition step, an amphoteric polyacrylamide preparation step of polymerizing a monomer in an aqueous medium to prepare the amphoteric polyacrylamide, wherein the monomer comprises:
60% by mole or more and 98% by mole or less of (meth)acrylamide;
1% by mole or more and 39% by mole or less of an anionic vinyl monomer; and
1% by mole or more and 39% by mole or less of a cationic vinyl monomer, based on the total number of moles.

4. The method for producing a paper with high filler content according to any one of claims 1 to 3, wherein the amphoteric polyacrylamide prepared in the amphoteric polyacrylamide preparation step has a Brookfield viscosity of 1,000 cps or more and 20,000 cps or less at a solid concentration of 10% by mass.

5. The method for producing a paper with high filler content according to any one of claims 1 to 4, wherein the paper with high filler content has an ash content of 8.5% by mass or more and 50% by mass or less.
